# EUROPÄISCHE PATENTSCHRIFT

(11) **EP 0 924 143 B1**
(45) Veröffentlichungstag und Bekanntmachung des Hinweises auf die Patenterteilung: **19.03.2003**
(21) Anmeldenummer: 98123806.6
(22) Anmeldetag: 15.12.1998
(51) Int. Cl.: B65G 1/04, B65G 1/10, B66F 9/07

(54) **Regallager**
Shelf storage
Magasin à rayonnage

(30) Priorität: 16.12.1997 DE 29722169 U
(43) Veröffentlichungstag der Anmeldung: 23.06.1999
(73) Patentinhaber: GEBR. WILLACH GmbH, D-53809 Ruppichteroth (DE)
(72) Erfinder: Willach, Hansfriedrich, 53809 Ruppichteroth (DE); Schmitt, Werner, 53809 Ruppichteroth (DE)
(74) Vertreter: Selting, Günther, Dipl.-Ing.

(56) Entgegenhaltungen:
- EP-A- 0 235 488
- EP-A- 0 431 823
- EP-A- 0 734 975
- WO-A-91/07338
- DE-U- 8 909 126

## Beschreibung

Die Erfindung betrifft ein Regallager, in dem Waren abgelegt werden können, wobei Informationen über die Ware und das jeweilige Fach gespeichert werden, um die Ware gezielt aus dem Fach entnehmen zu können.

Aus EP 0 734 975 A1 ist ein Regallager mit Ziehregalen bekannt. Bei diesem Regallager fährt ein Manipulator längs eines Mittelganges, zu dessen Seiten Ziehregale angeordnet sind, die einzeln in den Mittelgang hineingezogen werden können, so daß der Manipulator Zugriff auf das herausgezogene Ziehregal hat. Zum Beschicken des Regallagers ist ein Warenübernahme-Ziehregal vorgesehen, in das die Waren manuell eingelegt werden und das anschließend in dem Gang positioniert wird, wo der Manipulator auf die in dem Warenübernahme-Ziehregal abgelegten Waren zugreifen kann, um sie in Fächer der Ziehregale zu überführen. Bei dem bekannten Regalsystem sind die Waren in Hülsen enthalten, die jeweils eine Codierung tragen. Der Manipulator ist mit einem Lesegerät ausgestattet, das die auf den Hülsen angebrachten Codierungen liest und daraufhin die Hülse identifiziert. Anhand des Codes der Hülse wird dann auf die in der Hülse befindliche Ware geschlossen. Die Verwendung von Hülsen oder Transportbehältern in einem Regalsystem ist in mancherlei Hinsicht nachteilig. Die Hülsen erfordern eine aufwendige Logistik, da sie von derjenigen Stelle, an der sie entleert werden, an diejenige Stelle zurücktransportiert werden müssen, an der sie gefüllt werden. Weiterhin ist es erforderlich, am Füllplatz der Hülsen zahlreiche Hülsen bereitzuhalten, was einen erheblichen Platzbedarf erfordert. Schließlich hat die Wiedererkennbarkeit der Hülse keine absolut zuverlässige Aussagekraft für die Identifizierung des Inhalts der Hülse. Dies kann insbesondere bei Bestandsaufnahmen des Lagers zu Fehlern führen.

Aus DE 89 09 126 U ist auch ein Regallager mit einem Manipulator bekannt. Der Manipulator weist einen Warenträger mit einer in ein Regalfach einführbaren Tragfläche auf.

Der vorliegenden Erfindung liegt die Aufgabe zugrunde, ein Regallager zu schaffen, das es ermöglicht, Waren ohne standardisierte Transportbehälter in Regalfächern abzulegen bzw. aus den Regalfächern zu entnehmen.

Die Lösung dieser Aufgabe erfolgt erfindungsgemäß mit den im Patentanspruch 1 angegebenen Merkmalen.

Bei dem erfindungsgemäßen Regallager dient zum Einbringen und Entnehmen von Waren ein Warenträger, der in Form und Größe dem Regalfach im wesentlichen angepaßt ist und der in das Regalfach eingeführt werden kann. Der Warenträger kann als Hülse oder nach Art einer Schaufel ausgebildet sein. Generell reicht es aus, wenn er eine untere Tragfläche aufweist, auf die die Ware aufgelegt werden kann. Ein Warenträger in Form einer Hülse oder einer Schaufel hat jedoch den Vorteil, daß eine gewisse "Uniformierung" der Ware vorgenommen wird, weil der Warenträger zuvor prüft, ob die Ware überhaupt in das Regalfach hineinpaßt. Paßt die Ware nicht in den Warenträger, so paßt sie auch nicht in das Regalfach hinein.

Das Einlagern der Ware in das Regalfach erfolgt dadurch, daß in Verbindung mit dem Warenträger ein Ausschieber vorgesehen ist, der die Ware auf dem Warenträger vorschiebt, wenn dieser ganz oder teilweise in das Regalfach hineinragt. Dadurch wird die Ware in das Regalfach hinein von dem Warenträger abgeschoben. Auf diese Weise ist es möglich, eine Ware, die nicht in einem standardisierten Transportbehälter enthalten ist, in einem horizontalen Regalfach abzulegen. Soll die Ware wieder aus dem Regalfach entnommen werden, so wird der Warenträger von dem Manipulatorarm vollständig in das Regalfach eingeschoben. Dabei nimmt er die darin befindliche Ware auf. Beim nachfolgenden Herausziehen des Warenträgers liegt die Ware auf der Tragfläche und wird dadurch aus dem Regalfach entnommen.

Das erfindungsgemäße Regallager ist insbesondere für Kleinteile anwendbar, vorzugsweise als Apothekenlager. In Apotheken muß eine Vielzahl nicht-normierter Waren bzw. Packungen gelagert werden. Mit den Warenträgern wird eine bestimmte "Uniformierung" vorgenommen, wobei überprüft wird, ob die Ware in das betreffende Regalfach paßt. Anschließend kann der die Ware enthaltende Warenträger in eines der Regalfächer eingeführt werden, das von einem das Regallager steuernden Computer vorgegeben wird. Aus diesem Regalfach kann die Ware später wieder entnommen und entweder in ein anderes Regalfach überführt oder einem Kommissionierbehälter zugeführt werden. Ein besonderer Vorteil besteht darin, daß keine zum Lager gehörenden Transportbehälter erforderlich sind, und daß der Manipulator Waren unterschiedlicher Formen und Größen aufnehmen und transportieren kann.

Gemäß einer bevorzugten Weiterbildung der Erfindung ist der Warenträger eine Hülse, die an einem um eine Horizontalachse schwenkbaren Manipulatorarm befestigt ist und durch deren Boden eine Stange des Ausschiebers hindurchragt. Sobald die Hülse eine Ware aufgenommen hat, wird sie von dem Manipulatorarm in eine vertikale Lage geschwenkt, so daß die Ware auf den Hülsenboden gleitet. Damit ist die Gefahr des Herabgleitens der Ware vom Warenträger beseitigt. Die Ware wird vielmehr wie in einem oben offenen Behälter transportiert. Bei diesem Transport können verschiedene Operationen durchgeführt werden, wie beispielsweise das Wägen der Ware oder eine Größenermittlung. Auf diese Weise ist eine Kontrolle der Ware anhand des Gewichts und der Größe möglich, indem die Meßwerte in dem Computer gespeichert und/oder mit im Computer gespeicherten Größen der Ware verglichen werden. Für solche Messungen ist der Ausschieber geeignet. Der Ausschieber kann daher außer der Funktion des bloßen Ausschiebens auch Hilfsfunktionen für Meßvorrichtungen übernehmen.

Gemäß einer bevorzugten Weiterbildung der Erfindung sind mehrere auswechselbare Warenträger unterschiedlicher Größen vorgesehen. Wäre nur ein einziger Warenträger vorhanden, so müßte dessen Größe auf die größtmögliche zu speichernde Ware abgestimmt sein. Dies würde bedeuten, daß sämtliche Regalfächer entsprechend groß sein müßten. Dadurch, daß Warenträger unterschiedlicher Größen vorhanden sind, können auch Regalfächer unterschiedlicher Größen vorhanden sein, wobei ein Warenträger jeweils nur Regalfächer von der ihm zugeordneten Größe bedient. Auf diese Weise kann in Abhängigkeit von der Größe der jeweiligen Ware die Größe des Warenträgers und die Größe des zu benutzenden Regalfachs ausgewählt werden. Damit ist eine erhebliche Einsparung an Regalraum verbunden.

Der jeweils nicht benutzte Warenträger wird in einer mit dem Manipulator mitfahrenden Parkstation abgelegt und bereitgehalten, so daß der Manipulator an jeder Stelle des Fahrweges auf diesen Warenträger, wenn er benötigt wird, zugreifen kann. Sämtliche Warenträger haben eine normierte einheitliche Kupplungsvorrichtung, so daß jeder der Warenträger an den Manipulatorarm angekuppelt werden kann.

Gemäß einer bevorzugten Ausgestaltung der Erfindung weist der Ausschieber einen Schiebekörper auf, der Bestandteil des Warenträgers ist, und einen mit dem Schiebekörper kuppelbaren Antriebsteil, der Bestandteil des Manipulatorarmes ist. Der im Warenträger angeordnete Schiebekörper ist ein passives Teil, das keine elektrischen Einrichtungen aufweist und keine elektrischen Anschlüsse benötigt. Alle aktiven Komponenten befinden sich an dem Manipulatorarm.

Vorzugsweise weist der Manipulatorarm einen Kopf mit Kupplungsmitteln zum Ankuppeln eines Warenträgers und Sensoren mit nach vorne gerichtetem Erfassungsbereich auf. Die an dem Kopf angeordneten Sensoren tasten an dem Warenträger vorbei und ermitteln Strukturen oder Markierungen, die sich vor dem Warenträger befinden. Auf diese Weise ist es möglich, bei einer Fahrt des Manipulators beispielsweise das Regalende zu erkennen oder beim Einlegen der Waren in einen Kommissionierbehälter eine Orientierung an den Seitenwänden des Kommissionierbehälters vorzunehmen, um unterschiedliche Waren an unterschiedlichen Stellen des Kommissionierbehälters abzulegen. Außerdem kann mit solchen Sensoren eine Belegungskontrolle der Regalfächer durchgeführt werden.

Im folgenden wird unter Bezugnahme auf die Zeichnungen ein Ausführungsbeispiel der Erfindung näher erläutert.

Es zeigen:

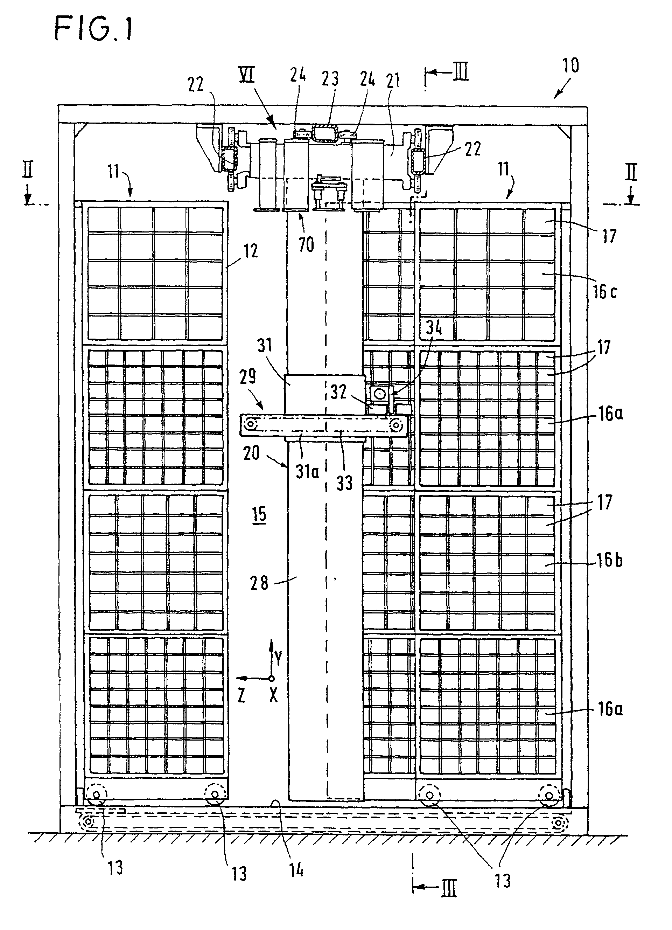

- Fig. 1: eine Frontansicht eines Regallagers, das mit Ziehregalen ausgestattet ist, wobei eines der Ziehregale teilweise in den Gang hinein ausgezogen ist,
- Fig. 2: eine Draufsicht auf das Regallager nach Fig. 1,
- Fig. 3: einen vertikalen Längsschnitt durch das Regallager entlang der Linie III-III von Fig. 1,
- Fig. 4: einen Schnitt entlang der Linie IV-IV von Fig. 2 zur Darstellung des Manipulatorarmes mit daran befestigtem Warenträger,
- Fig. 5: das Zurückziehen des Warenträgers bei gleichzeitigem Vorschieben des Ausschiebers im Warenträger,
- Fig. 6: eine Ansicht der Parkstation für die Warenträger gemäß Pfeil VI von Fig. 1,
- Fig. 7: eine Unteransicht der Parkstation mit eingesetzten Warenträgern aus Richtung der Pfeile VII-VII von Fig. 6,
- Fig. 8: eine Ansicht des Manipulatorarms, der auf einen der in der Parkstation befindlichen Warenträger zugreift,
- Fig. 9: eine Draufsicht auf den Kopf des Manipulatorarms aus Richtung der Pfeile IX-IX von Fig. 8,
- Fig. 10: die Durchführung einer Längenmessung an der Parkstation und
- Fig. 11: eine abgewandelte Form von Manipulatorarm und Warenträger mit integrierter Wägevorrichtung.

Das Regallager ist generell in gleicher Weise ausgebildet wie dasjenige von EP 0 734 975 A1, mit dem Unterschied, daß die Regalfächer 17 rechteckige Form haben, und daß die Waren in die Regalfächer unmittelbar, also ohne spezielle Lagerbehälter (Hülsen), eingelegt werden.

Das Regallager weist ein Traggestell 10 auf, in dem sich mehrere Ziehregale 11 befinden. Jedes Ziehregal weist einen hochkantstehenden Regalrahmen 12 auf, der mit Rollen 13 auf einer Unterlage 14 läuft. Die Ziehregale 11 sind zu beiden Seiten eines Ganges 15 angeordnet, wobei jedes Ziehregal in den Gang 15 hineinbewegt werden kann. Der Gang 15 hat etwa die Breite eines Ziehregals 11.

Die Ziehregale 11 enthalten Einsätze 16a,16b,16c, die beispielsweise aus Hartschaumstoff bestehen und in denen die Regalfächer 17 als horizontale rechteckige Kanäle ausgebildet sind. Die Regalfächer 17 haben unterschiedliche Größen. Die Einsätze 16a weisen Regalfächer 17 von kleinem Querschnitt auf, die Einsätze 16b weisen Regalfächer 17 von mittlerem Querschnitt auf und die Einsätze 16c weisen Regalfächer von großem Querschnitt auf. Die Tiefen aller Regalfächer sind gleich. Die Regalfächer 17 sind als Sacklöcher ausgebildet, d.h. sie sind am vorderen Ende offen und am rückwärtigen Ende geschlossen.

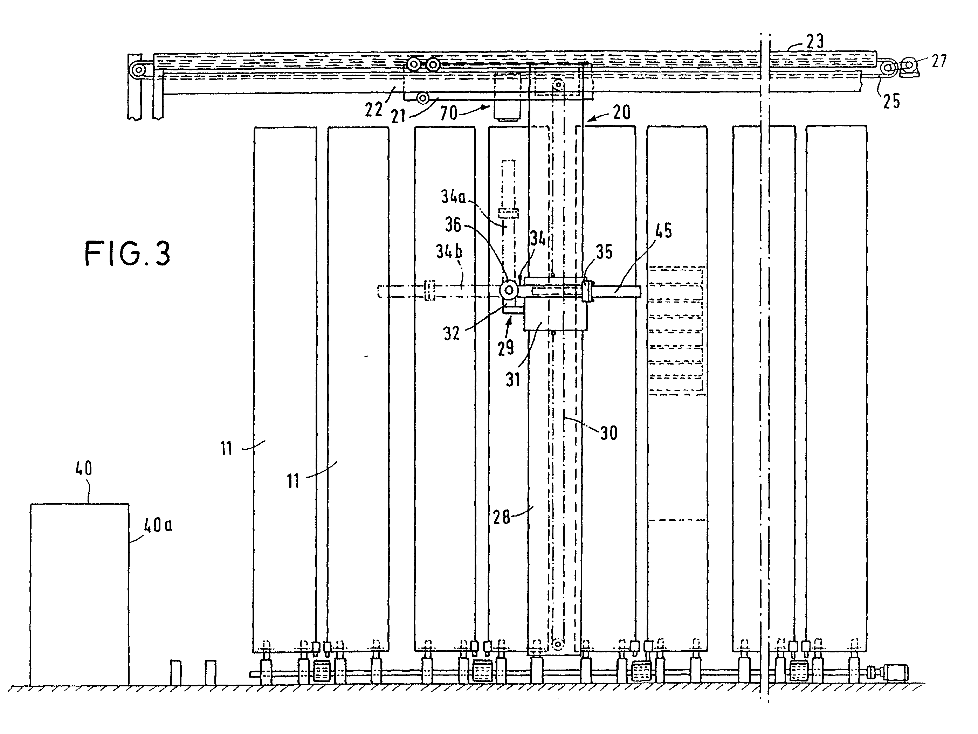

In Längsrichtung des Ganges 15 ist die Transportvorrichtung 20 verfahrbar. Diese weist einen Transportschlitten 21 auf, der an Schienen 22 des Rahmens 10 geführt und oberhalb der Ziehregale 11 angeordnet ist. Über dem Transportschlitten 21 verläuft eine Führungsschiene 23, an deren entgegengesetzten Außenseiten Führungsrollen 24 des Transportschlittens 21 angreifen. In der Führungsschiene 23 verläuft der Obertrum eines Treibriemens 25 (Fig. 3), dessen Enden an dem Transportschlitten 21 befestigt sind und der von einem Motor 27 angetrieben ist. Der Motor 27 kann den Transportschlitten numerisch gesteuert an beliebigen Positionen in X-Richtung, also in Richtung des Ganges 15, positionieren. Die Y-Richtung ist die Höhenrichtung und die Z-Richtung die Zustellrichtung, in der die Ziehregale verschoben werden.

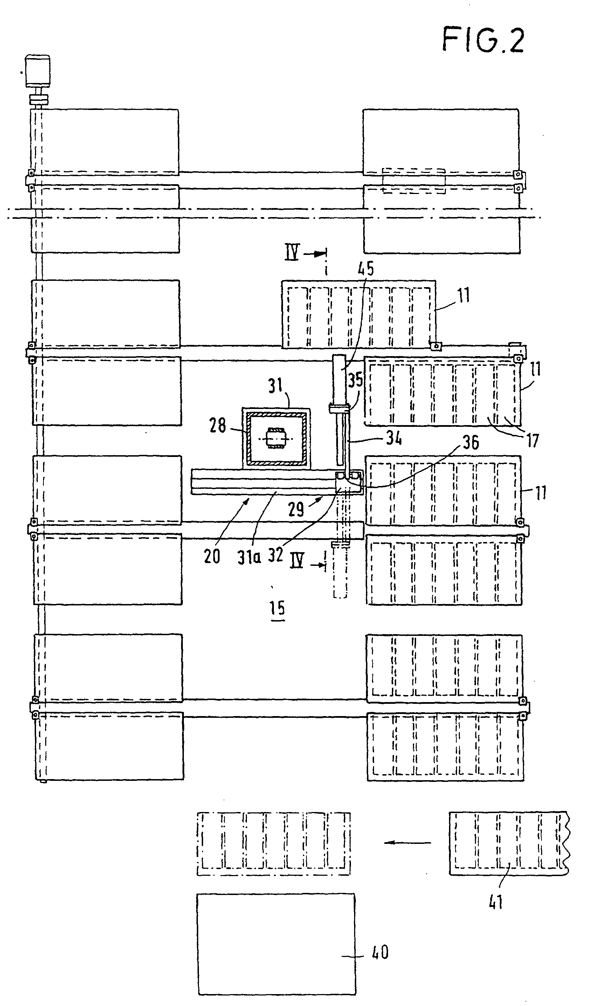

Die Transportvorrichtung 20 weist ferner einen von dem Transportschlitten 21 nach unten ragenden Mast 28 auf, dessen unteres Ende frei, d.h. ungeführt, ist und der starr an dem Transportschlitten 21 befestigt ist, so daß er unabhängig von einwirkenden Belastungen stets seine senkrechte Position beibehält. In dem Mast 28 verläuft ein von einem Motor angetriebener Zahnriemenantrieb 30 für den Antrieb eines Vertikalschlittens 31, der Bestandteil des Manipulators 29 ist. Der Vertikalschlitten 31 weist eine horizontale Führungsbahn 31a auf, die nach beiden Seiten über den Mast 28 übersteht und einen Horizontalschlitten 32 trägt, welcher auf der Führungsbahn 31a in Z-Richtung verfahrbar ist. Die Führungsbahn 31a befindet sich auf der Abgabeseite des Mastes 28, also auf derjenigen Seite zu der die Produkte gemäß Fig. 2 aus dem Regallager herausgeführt werden.

Der Horizontalschlitten 32 wird über einen in der Führungsbahn 31a enthaltenen Riementrieb 33 angetrieben, so daß er von der rechten auf die linke Seite des Masts 28 bewegt werden kann. Auf dem Horizontalschlitten 32 befindet sich der Manipulatorarm 34, der beim Zugreifen auf ein Regalfach in X-Richtung weist und an seinem vorderen Ende einen Kopf 35 aufweist. Der Manipulatorarm 34 weist an seinem anderen Ende ein Schwenklager 36 auf, um das er um die horizontale Z-Achse schwenkbar ist. Der Schwenkwinkel beträgt etwas mehr als 180°, so daß der Manipulatorarm bei der Entnahme von Ware aus einem Regalfach 17 geringfügig leicht nach unten geneigt ist, während er beim Ablegen der Ware horizontal ausgerichtet ist.

Die Steuerung ist so vorgesehen, daß der Horizontalschlitten 32 mit dem in Zugriffsrichtung (d.h. am Mast 28 vorbei) weisenden Manipulatorarm 34 zwei fest vorgegebene Stellungen einnehmen kann, nämlich rechts und links vom Mast 28. In jeder dieser Stellungen befindet sich der Manipulatorarm 34 in der vertikalen Zielebene. Auf diese Zielebene wird das jeweilige Regalfach 17, auf das zugegriffen werden soll, gebracht, indem das Ziehregal 11 entsprechend weit in den Gang 15 hineinbewegt wird.

Am abgabeseitigen Ende des Ganges 15 befindet sich ein Warenübernahme-Ziehregal 41, das dazu dient, Waren vollautomatisch in das Regallager einzulagern. Das Warenübernahme-Ziehregal 41 kann ebenfalls quer in den Gang 15 hineinbewegt werden, wobei die in seinen Regalfächern enthaltenen Waren von dem Manipulator 29 ergriffen und in Regalfächer der zur Speicherung vorgesehenen Ziehregale überführt werden können. Zum Anfahren der Fächer des Warenübernahme-Ziehregals 41 ist der Horizontalschlitten 32 entlang des gesamten Weges der horizontalen Führung 31a gesteuert verschiebbar. Das Warenübernahme-Ziehregal 41 kann, im Unterschied zu den anderen Ziehregalen 11, aus dem Gestell 10 des Regallagers seitlich herausgefahren werden, damit es dort manuell mit neuen Waren bestückt werden kann. Die Bestückung kann erfolgen, ohne daß die Warenausgabe aus den Ziehregalen und der Warentransport zu der Aufnahmevorrichtung 40 gestört werden.

Die Aufnahmevorrichtung 40 ist ein Kommissionierbehälter, in dem die Waren für einen bestimmten Kunden oder für eine bestimmte Versendung zusammengestellt werden, indem der Manipulator 29 diese Waren aus den Ziehregalen entnimmt und in die vertikale Öffnungsseite 40a der Aufnahmevorrichtung 40 hineinsteckt.

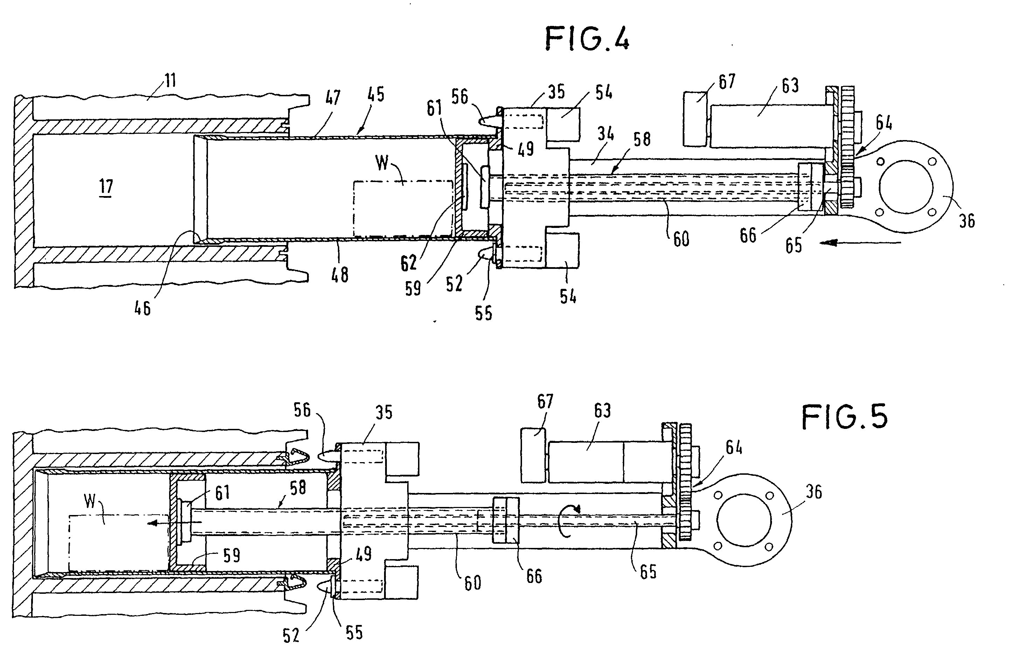

Die Fign. 4 und 5 zeigen das Ablegen einer Ware W durch den Manipulator 29 in einem Regalfach 17. An den Kopf 35 des Manipulatorarms 34 ist ein Warenträger 45 angekuppelt. Der Warenträger 45 besteht aus einer rechtekigen Hülse, die in Form und Größe dem Innenraum des Regalfachs 17 angepaßt ist und die in voller Länge bis zum rückwärtigen Ende in das Regalfach eingefahren werden kann. Am vorderen Ende des Warenträgers 45 befindet sich eine spitz zulaufende Unterfahrkante 46, die über die Bodenwand des Regalfachs 17 streicht, so daß ein Gegenstand, der im Regalfach liegt und der von der Rückwand des Regalfachs abgestützt ist, über die Unterfahrkante 46 in die Hülse 47 gleitet. Die untere Seitenwand der Hülse 47 bildet die Tragfläche 48, auf der die Ware W aufliegt.

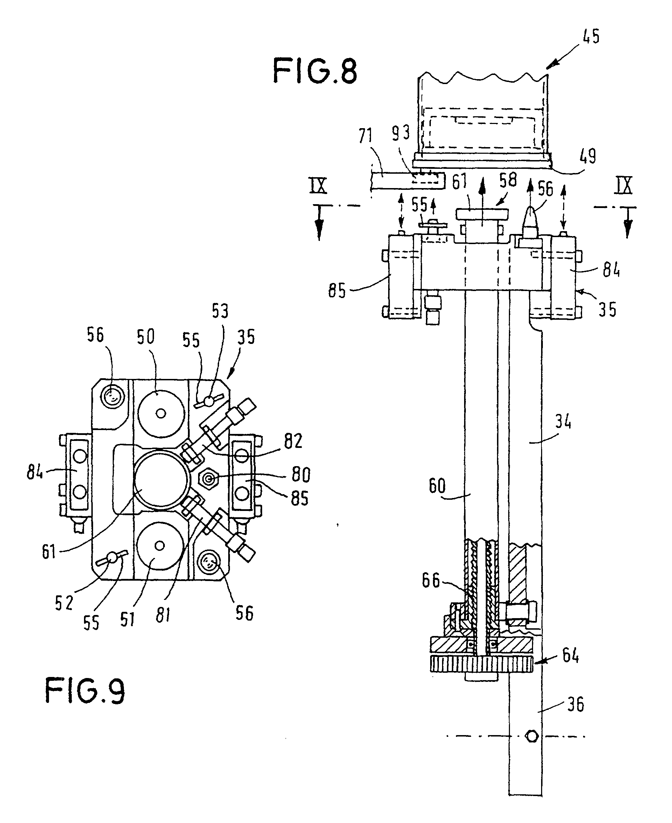

Am rückwärtigen Ende der Hülse 47 befindet sich eine Kupplungsplatte 49, mit der der Warenträger 45 an den Kopf 35 angekuppelt werden kann. Die am Kopf 35 vorgesehenen Kupplungsmittel bestehen aus zwei Elektromagneten 50,51 (Fig. 9), welche elektrisch erregt werden und dann jeweils eine Eisenscheibe in der Kupplungsplatte 49 anziehen, sowie aus elektromagnetischen Verriegelungsvorrichtungen 52,53 mit jeweils einem Drehmagneten 54, der einen Drehstift 55 verschwenkt, welcher durch eine Art Schlüsselloch der Kupplungsplatte 49 hindurchgesteckt ist. Die Verriegelungsvorrichtungen 52,53 dienen als Sicherung der Ankupplung gegen Stromausfall. Wenn nämlich die Elektromagnete 50,51 bei Stromausfall aberregt werden, wird der Warenträger 45 durch die Verriegelungsvorrichtungen 52,53 weiterhin am Kopf 35 festgehalten. Die Druckmagnete 54 sind immer dann erregt, wenn die Elektromagnete 50,51 ausgeschaltet sind. In diesem Zustand geben sie die Verriegelungsvorrichtungen 52,53 frei. Bei Stromausfall werden die Verriegelungsvorrichtungen 52,53 durch Federn in den Sicherungszustand gestellt. Außerdem sind am Kopf 35 Zentrierdorne 56 vorgesehen, die in entsprechende Zentrieröffnungen der Kupplungsplatte 49 hineinragen. Der Warenträger 45 ist, wenn er an den Manipulatorarm 34 angekuppelt ist, Bestandteil des Manipulators 29. Am Manipulatorarm ist ferner der Ausschieber 58 vorgesehen. Dieser weist einen im Warenträger 45 angeordneten Schiebekörper 59 und eine mit dem Schiebekörper kuppelbare längsverschiebbare Stange 60 auf. Am vorderen Ende der Stange 60 befindet sich ein Magnet 61, der mit einer Eisenplatte 62 des Schiebekörpers 59 zusammenwirkt und die Eisenplatte 62 anzieht.

Die Stange 60 wird von einem Elektromotor 63 über ein Getriebe 64 angetrieben. Das Getriebe 64 treibt eine in der hohlen Stange 60 verlaufende Gewindespindel 65 an, auf der eine mit der Stange 60 verbundene Spindelmutter 66 sitzt. Bei Drehung der Spindel 65 wird die gegen Drehung festgehaltene Spindelmutter 66 zusammen mit der Stange 60 axial bewegt. Dabei stößt der Magnet 61 gegen die Eisenplatte 62. Die Welle des Elektromotors 63 ist mit einem Winkelcodierer 67 verbunden, dessen Signale dem das Regallager steuernden Computer zugeführt werden, der somit die Positionsdaten des Ausschiebers 58 in bezug auf den Manipulatorarm 34 erhält.

Beim Ablegen einer Ware in ein Regalfach 17 wird gemäß Fig. 4 zuerst der horizontal eingestellte Manipulatorarm 34 auf das anzusteuernde Regalfach ausgerichtet. Dies geschieht durch den Steuercomputer des Regallagers, der von entsprechenden Sensoren die Positionsdaten des Vertikalschlittens 31, des Horizontalschlittens 32 und des Masts 28 empfängt und die Positionsregelung der betreffenden Komponenten vornimmt.

Der Warenträger 45 wird durch Verfahren des Masts 28 in X-Richtung in das betreffende Regalfach 17 eingefahren, so wie dies in Fig. 4 dargestellt ist, und zwar bis zur gesamten Tiefe, d.h. bis die Unterfahrkante 46 sich nahe der Rückwand des Regalfachs 17 befindet. Dann wird durch den Motor 63 der Ausschieber 58 betätigt, wobei der Magnet 61 die Stange 60 mit dem Schiebekörper 59 kuppelt und die Stange 60 den Schiebekörper 59 im Innern des Warenträgers 45 vorschiebt, so wie dies in Fig. 5 dargestellt ist.

Wenn sich in dem Regalfach bereits eine Ware befindet, kann der Ausschieber 58 nicht so weit vorgeschoben werden, wie dies die abzulegende Ware W erlaubt. Der Motor 63 weist eine Überstromerkennung auf, die erkennt, wenn die Vorwärtsbewegung des Schiebers 58 blockiert wird. Auf diese Weise kann eine Fehlbelegung eines Regalfachs festgestellt werden.

Wenn sich keine Ware in dem Regalfach befindet, in dem die Ware W abgelegt werden soll, schiebt der Ausschieber 58 die Ware bis in die Nähe der Rückwand des Regalfachs vor. Anschließend wird der Manipulatorarm 34 durch Zurückfahren des Masts 28 zurückgezogen, wobei gleichzeitig in dem Warenträger der Ausschieber 58 weiter vorgeschoben wird. Auf diese Weise wird die Ware in dem Regalfach abgelegt. Wenn auf die Funktion des Abtastens des Regalfaches verzichtet wird, genügt es, den Warenträger nur zum Teil in das Regalfach einzuführen und dann den Ausschieber bei stillstehendem Warenträger vorzuschieben.

Wird eine Ware aus dem Regalfach 17 entnommen, so wird der Warenträger 45 in das Regalfach eingefahren, wobei die Ware W bis zur Rückwand vorgeschoben wird und dann über die Unterfahrkante 46 auf den Warenträger aufgeschoben wird. Danach wird der Manipulatorarm 34 zurückgezogen und in die in Fig. 3 dargestellte Position 34a um 90° hochgeschwenkt. Dadurch wird die Ware W am Herausfallen aus dem Warenträger gehindert. Die Position 34b, in der der Manipulatorarm 34 gegenüber dem Regalzugriff um etwa 180° verschwenkt ist, ist die Abgabeposition, in der der Manipulator die Ware in der Aufnahmevorrichtung 40 ablegen kann. Auch hierbei bewirkt der Ausschieber 58 das Ausschieben der Ware aus dem Warenträger. Durch den Ausschieber 58 können die Waren in der Aufnahmevorrichtung 40 geordnet abgelegt werden, was das raumausnutzende Stapeln, sei es hintereinander, nebeneinander oder übereinander, zuläßt.

An dem Transportschlitten 21 oder am Mast 28 ist eine Parkstation 70 vorgesehen, in der für Warenträger 45,45a,45b von drei unterschiedlichen Größen jeweils eine Aufnahmeposition vorgesehen ist. Die Parkstation befindet sich lotrecht über der Führungsbahn 31a. Jede der drei Warenträgerpositionen kann von dem in eine senkrechte Position geschwenkten Manipulatorarm 34 angefahren werden. Der Warenträger 45a mit dem kleinsten Querschnitt dient zur Bedienung der kleinen Regalfächer, der mittlere Warenträger 45 dient zur Bedienung der mittelgroßen Regalfächer und der größte Warenträger 45b dient zur Bedienung der großen Regalfächer. Der jeweils benutzte Warenträger ist an den Manipulatorarm 34 angekuppelt, während die beiden unbenutzten Warenträger sich in der Parkstation befinden und mit dem Mast 28 mitbewegt werden, um für den Manipulator 29 immer in kurzer Zeit verfügbar zu sein. Die Auswechselvorgänge können während des Fahrens des Mastes 28 ausgeführt werden.

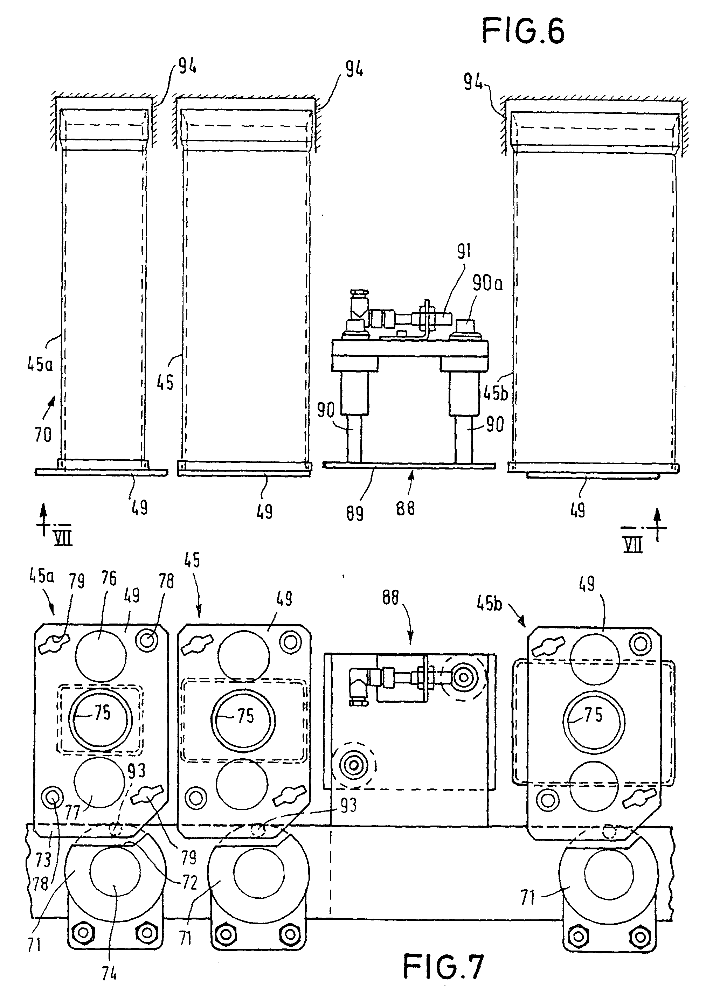

Gemäß Fig. 6 sind die Warenträger in der Parkstation 70 vertikal angeordnet, wobei die Kupplungsplatte 49 nach unten weist. Die Kupplungsplatte hat bei allen Warenträgern die gleiche Form und Größe.

Wie aus Fig. 7 hervorgeht, ist unterhalb jeder Aufnahmeposition eine Tragplatte 71 angeordnet, die einen überstehenden Seitenrand 73 der Kupplungsplatte 49 untergreifen kann und auf einer drehbaren vertikalen Achse 74 sitzt. Jede der Achsen 74 ist mit einem gesteuerten Antrieb versehen. In Fig. 7 ist der Zustand dargestellt, daß die Warenträger 45,45a,45b freigegeben werden. Jede Tragplatte 71 kann um etwa 90° in eine Verriegelungsposition gedreht werden, bei der sie den Rand 73 des Warenträgers untergreift und diesen in der Parkstation 70 festhält. Jeder Warenträger ragt in eine Führungshülse 94, die ihn in vertikaler Ausrichtung hält. Jede Tragplatte trägt eine Wägeeinrichtung 93 in Form einer Kraftmeßdose, auf der der Seitenrand 73 der Kupplungsplatte 49 aufliegt. Die Wägeeinrichtung 93 liefert ein Signal, das das Gewicht des Warenträgers und der darin enthaltenen Ware angibt. Daraus wird das Gewicht der Ware berechnet.

Aus Fig. 7 ist zu erkennen, daß die Kupplungsplatten 49 der Warenträger jeweils eine Mittelöffnung 75 für den Durchtritt der Stange 60 sowie zwei Eisenplatten 76,77 für den Angriff der Elektromagnete 50,51 aufweisen. Ferner sind zwei Zentrierlöcher 78 für die Zentrierdorne 56 und zwei schlüssellochartige Löcher 79 für die Drehstifte 55 vorgesehen.

Fig. 8 zeigt das Einbringen eines Warenträgers 45 durch den Manipulatorarm 34 in die Parkstation 70. Der vertikal ausgerichtete Manipulatorarm 34 fährt am Mast 28 hoch, bis er die Parkstation 70 erreicht und seine Kupplungsplatte 49 über die zugehörige Tragplatte 71 hinaus angehoben wurde. Dann wird die Achse 74 um etwa 90° verschwenkt, so daß die Tragplatte 71 unter die Kupplungsplatte 49 greift. Dann werden die Kupplungsvorrichtungen 50,51 und die Kupplungsvorrichtungen 52,53 gelöst, so daß der Manipulatorarm herunterfahren kann, während der Warenträger in seiner Parkposition verbleibt. Der Manipulatorarm kann dann unter einem anderen Warenträger hochgefahren werden, um diesen an den Kopf 35 anzukuppeln. Nach dem Lösen der Tragplatte 71 wird dann der mit dem Manipulatorarm gekuppelte Warenträger heruntergefahren.

Wie aus Fig. 9 hervorgeht, befindet sich in dem Kopf 35 des Manipulatorarms 34 eine Durchtrittsöffnung für die Stange 60 und den Magneten 61. Außerdem ist ein Sensor 80 vorgesehen, der das Vorhandensein eines Warenträgers an dem Kopf 35 erkennt und diese Information an den Computer gibt. Zwei weitere Sensoren 81,82 reagieren auf eine vordere und eine rückwärtige Markierung an der Stange 60, so daß der Sensor 81 als Endschalter wirkt, welcher das vollständige Ausfahren des Ausschiebers 58 feststellt, und der Sensor 82 als Endschalter, welcher den vollständig eingefahrenen Zustand des Ausschiebers erkennt.

Seitlich von dem Kopf 35 sind noch zwei weitere Sensoren 84,85 angeordnet, die als Reflexionslichttaster wirken und einen Lichtstrahl nach vorne aussenden, welcher von den Vorderkanten eines Regalfachs reflektiert wird. Die Sensoren 84,85 sind imstande, über die Länge des Warenträgers 45 hinweg eine Baustruktur oder den Rand einer Öffnung zu detektieren. Durch eine anschließende Feinsteuerung kann dann der Warenträger in eine bestimmte gewünschte Position in bezug auf die Baustruktur gebracht werden.

Die Sensoren 84,85 können zusätzlich oder alternativ auch zur Kontrolle der Belegung der Regalfächer benutzt werden. Hierzu kann der Kopf 35 ohne einen daran befestigten Warenträger so vor einem Regalfach positioniert werden, daß der betreffende Sensor 84,85 in das Regalfach hineinleuchtet. Bei Vorhandensein eines Gegenstandes in dem Regalfach wird die Belegung dieses Regalfachs dadurch erkannt, daß das ausgesandte Lichtsignal in anderer Weise reflektiert wird als bei einem unbelegten Regalfach. Auf diese Weise kann der tatsächliche Ist-Belegungszustand der Regalfächer überprüft und mit dem im Computer gespeicherten Belegungszustand verglichen werden.

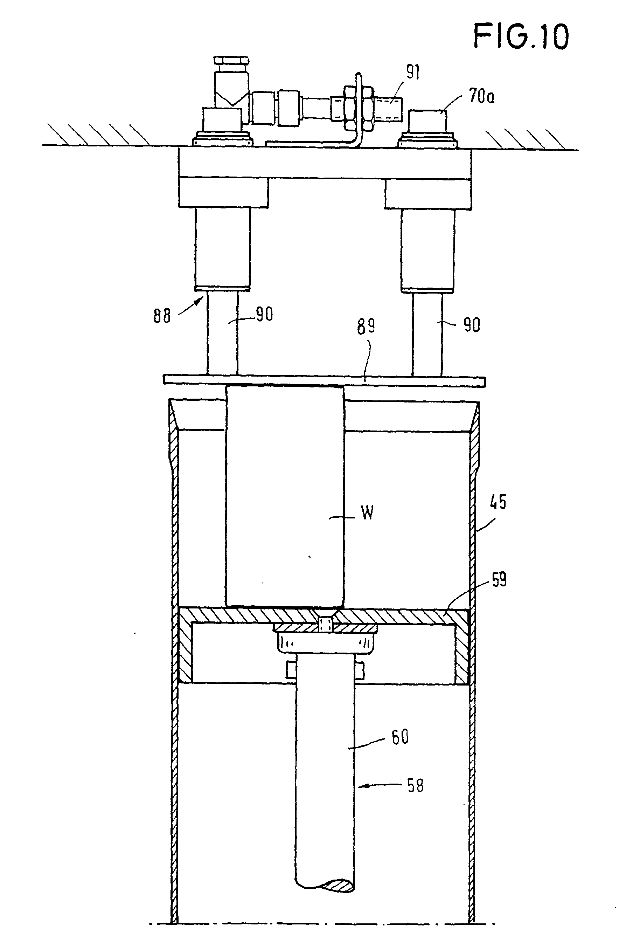

Zusammen mit der Parkstation 70 ist eine Längenmeßvorrichtung 88 vorgesehen, die zwischen den Parkpositionen der Warenträger angeordnet ist. Sie besteht aus einer plattenförmigen Anschlagvorrichtung 89 (Fign. 6 und 10), die an vertikal verschiebbaren Stempeln 90 befestigt ist. Das Zurückweichen der Stempel 90 wird durch einen Schalter 91 detektiert, der auf das Ende 90a des einen Stempels anspricht.

Gemäß Fig. 10 wird ein Warenträger 45 in vertikaler Ausrichtung in eine Längenmeßposition unterhalb der Längenmeßvorrichtung 88 gebracht. Hierbei hat der Warenträger eine vorbestimmte Höhenposition. In diesem Zustand wird der Ausschieber 58 ausgeschoben, so daß der Schiebekörper 59 die Ware W in Richtung auf die Auslaßöffnung des Warenträgers vorschiebt. Wenn die Ware W gegen die Anschlagvorrichtung 89 stößt und daraufhin der Schalter 91 betätigt wird, wird die Position des Ausschiebers 58 anhand des Ausgangssignals des Meßwertgebers 67 festgestellt und damit die Länge bzw. Höhe der Ware W ermittelt. Anhand der Warenhöhe kann eine Plausibilitätskontrolle, z.B. für Inventurzwecke, durchgeführt werden und es kann auch festgestellt werden, ob die betreffende Ware beispielsweise noch in die Aufnahmevorrichtung 40, in der sich bereits andere Waren befinden, hineinpaßt. Die Längenmessung kann durchgeführt werden, während der Warenträger von einem Regalfach zu einem anderen oder von einem Regalfach zu der Aufnahmevorrichtung 40 bewegt wird.

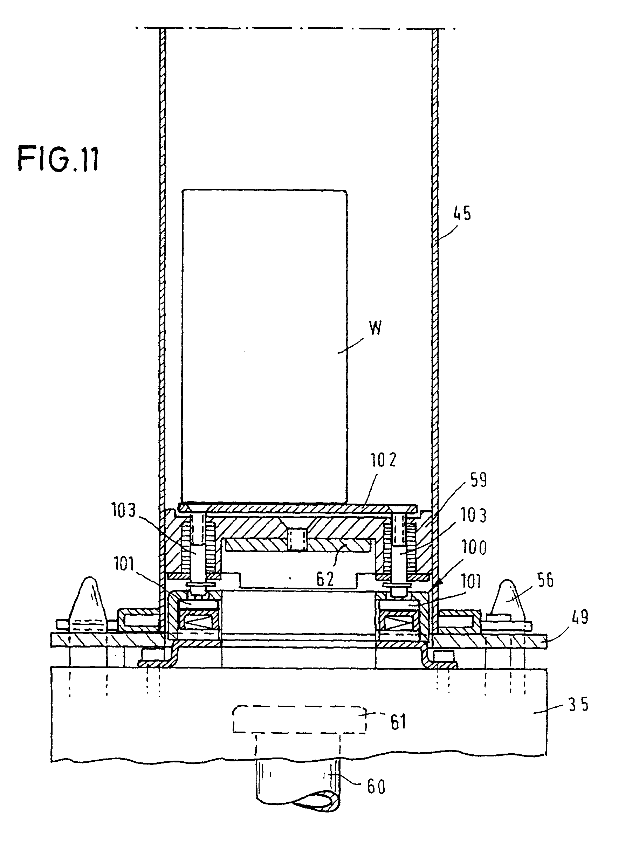

Eine alternative Ausführungsform der Wägeeinrichtung ist in Fig. 11 dargestellt. Die Wägeeinrichtung 100 besteht hier aus mehreren an dem Kopf 35 des Manipulatorarms befestigten Kraftmeßdosen 101, die in das rückwärtige Ende des Warenträgers 45 eintauchen, wenn der Warenträger an dem Kopf 35 angekuppelt wird. In dem Warenträger 45 befindet sich eine Tragplatte 102, an der axial abstehende Stifte 103 vorgesehen sind, welche durch den Schiebekörper 59 hindurchgehen und in die Kraftmeßdosen 101 hineinragen. Die Stifte 103 sind in dem Schiebekörper 59 in Grenzen verschiebbar. Das Gewicht einer auf der Tragplatte 102 ruhenden Ware W wird über die Stifte 103 auf die Kraftmeßdosen 101 übertragen. Die von den Kraftmeßdosen festgestellten Gewichtskräfte werden addiert und daraus wird das Gewicht der Ware W ermittelt und an den Computer weitergeleitet. Bei der Gewichtsmessung wird die Stange 60 von dem Schiebekörper 59 abgekuppelt.

Bei dem Ausführungsbeispiel von Fig. 11 erfolgt die Gewichtsbestimmung der Ware W während des Transports der Ware mit senkrechtstehendem Warenträger 45. Es ist also nicht erforderlich, den Warenträger in eine Parkposition zu bringen.

Ware, die in das Regallager eingelagert wird, wird zunächst manuell oder mit einer manuell bedienbaren Bestückungsvorrichtung in das Warenübernahmeregal 41 eingegeben. Dabei wird das betreffende Regalfach anhand eines maschinenlesbaren Schildes, das sich an dem Regalfach befindet, identifiziert. Eine Identifikationsnummer, die sich auf der Ware befindet, z.B. der Barcode, wird vor dem Eingeben der Ware in das Übernahmeregal gelesen und zusammen mit der Identifikationsnummer des Fachs des Übernahmeregals in den Computer eingelesen. Nachdem mehrere Fächer des Übernahmeregals 41 auf diese Weise bestückt worden sind, wird das Übernahmeregal gemäß Fig. 2 in den Gang 15 bewegt, so daß der Manipulator 29 darauf zugreifen kann.

Der Manipulator kann nun während der Nachtzeiten oder sonstiger Leerzeiten Waren aus dem Übernahmeregal herausnehmen und in einem der Speicherregale 11 ablegen. Stets enthält der Speicher des Rechners die Zuordnung zwischen der Ware und dem Regalfach, in dem sich diese Ware befindet. Es ist also kein Suchlauf erforderlich, um eine bestimmte Ware zu ermitteln. Während des Transports von dem Übernahmeregal zu dem Speicherregal erfolgen die warenspezifischen Messungen von Länge und Gewicht. Dasjenige Ziehregal 11, das bedient werden soll, wird in den Gang 15 hineingefahren, und zwar so weit, daß das zu bedienende Regalfach sich in der Zielebene des Manipulators 29 befindet. Dann fährt der Mast 28 auf das Regalfach zu, wobei der Manipulator 29 auf die Höhe des Ziel-Regalfachs eingestellt wurde, so daß der Warenträger 45 direkt in das Ziel-Regalfach eintaucht. Zum Ablegen einer Ware wird der Ausschieber 58 in der beschriebenen Weise betätigt.

Beim Entnehmen einer Ware aus einem Regalfach wird lediglich der Warenträger 45 in das Regalfach eingefahren und wieder herausgezogen, um anschließend in die vertikale Position hochgeschwenkt zu werden. Nach etwaiger Durchführung entsprechender Kontrollen, wie einer Längenmessung der Ware bzw. eines Wägevorgangs, die während des Fahrens der Transporteinrichtung durchgeführt werden können, wird die Ware in dem Aufnahmebehälter 40 abgelegt. Hierzu wird der Warenträger an die Öffnung des Aufnahmebehälters 40 herangefahren und anschließend wird die Ware durch Betätigen des Ausschiebers 58 in den Aufnahmebehälter 40 eingeschoben. Es wird diejenige Position gespeichert, an der die Ware in dem Aufnahmebehälter 40 abgelegt wurde. Wenn eine weitere Ware in dem Aufnahmebehälter abgelegt werden soll, geschieht dies, gesteuert durch den Computer, an einer benachbarten Stelle, so daß sichergestellt ist, daß nicht zwei Waren an derselben Stelle abgelegt werden. Auf diese Weise kann beispielsweise ein Karton gefüllt werden. Der Computer gibt dann gleichzeitig Daten über das Gesamtgewicht der in dem Aufnahmebehälter 40 befindlichen Ladung an.

## Patentansprüche

1. Regallager mit einem Manipulator (29), der imstande ist, Waren (W) in ein Regalfach (17) einzuführen und aus dem Regalfach zu entnehmen, wobei
der Manipulator (29) einen Warenträger (45) mit einer in ein Regalfach (17) einführbaren Tragfläche (48) aufweist,
**dadurch gekennzeichnet,**
**daß** der Manipulator einen längs der Tragfläche (48) gesteuert verschiebbaren Ausschieber (58) aufweist.

2. Regallager nach Anspruch 1, **dadurch gekennzeichnet, daß** der Warenträger (45) eine Hülse (47) ist, die an einem um eine horizontale Achse (Z) schwenkbaren Manipulatorarm (34) befestigt ist und durch deren Boden eine Stange (60) des Ausschiebers (58) hindurchragt.

3. Regallager nach Anspruch 1 oder 2, **dadurch gekennzeichnet, daß** ein den Warenträger (45) tragender Manipulatorarm (34) in eine vertikale Position schwenkbar ist, und daß der Manipulatorarm (34) und/oder der Warenträger (45) eine Wägeeinrichtung (100) für die Gewichtsermittlung einer auf dem Ausschieber (58) ruhenden Ware (W) aufweist.

4. Regallager nach einem der Ansprüche 1-3, **dadurch gekennzeichnet, daß** der Ausschieber (58) mit einer Wegmeßeinrichtung (67) gekoppelt ist, die die Stellung des Ausschiebers in bezug auf den Warenträger (45) angibt.

5. Regallager nach einem der Ansprüche 1-4, **dadurch gekennzeichnet, daß** der Ausschieber (58) Bestandteil einer Längenmeßvorrichtung (88) ist, die eine Anschlagvorrichtung (89) aufweist, gegen welche der Ausschieber (58) eine in dem Warenträger (45) befindliche Ware (W) drückt.

6. Regallager nach einem der Ansprüche 1-5, **dadurch gekennzeichnet, daß** der Ausschieber (58) einen Antrieb (63) aufweist, und daß dieser Antrieb (63) eine Erkennungseinrichtung aufweist, die auf einen Widerstand beim Ausschieben reagiert und dadurch ein bereits besetztes Regalfach erkennt.

7. Regallager nach einem der Ansprüche 1-6, **dadurch gekennzeichnet, daß** mehrere auswechselbare Warenträger (45,45a,45b) vorgesehen sind, die jeweils eine Kupplungsvorrichtung (49) zum Ankuppeln an einen Manipulatorarm (34) des Manipulators (29) aufweisen, und daß eine von dem Manipulatorarm (34) anfahrbare Parkstation (70) vorgesehen ist, in der die Warenträger (45,45a,45b) abgelegt und an der sie von dem Manipulatorarm (34) wieder aufgenommen werden können.

8. Regallager nach einem der Ansprüche 1-7, **dadurch gekennzeichnet, daß** der Ausschieber (58) einen Schiebekörper (59) aufweist, der Bestandteil des Warenträgers (45) ist, und einen mit dem Schiebekörper (59) kuppelbaren Antriebsteil (63,64,60), der Bestandteil des Manipulatorarms (34) ist.

9. Regallager nach einem der Ansprüche 1-8, **dadurch gekennzeichnet, daß** der Manipulatorarm (34) einen Kopf (35) mit Kupplungsmitteln (50,51;52,53) zum Ankuppeln eines Warenträgers (45) und Sensoren (84,85) mit nach vorne gerichtetem Erfassungsbereich aufweist.

10. Regallager nach einem der Ansprüche 1-9, **dadurch gekennzeichnet, daß** der Manipulatorarm (34) einen Kopf (35) mit Kupplungsmitteln (50,51;52,53) zum Ankuppeln eines Warenträgers (45) und Sensoren (81,82) zum Ermitteln der vorderen und der rückwärtigen Endstellung des Ausschiebers (58) aufweist.

## Claims

1. Shelf storage, comprising a manipulator (29) adapted to introduce articles (W) into a shelf bin (17) and to remove articles from the shelf bin, wherein
the manipulator (29) comprises an article carrier (45) having a support face (48) to be introduced into a shelf bin (17),
**characterized in**
**that** the manipulator comprises a push-out member (58) arranged for controlled displacement along the support face (48).

2. The shelf storage according to claim 1, **characterized in that** the article carrier (45) comprises a shell (47) which is attached to a manipulator arm (34) pivotable around a horizontal axis (Z), and which has a rod (60) of the push-out member (58) extending through its bottom.

3. The shelf storage according to claim 1 or 2, **characterized in that** a manipulator arm (34) holding the article carrier (45) is pivotable into a vertical position, and that the manipulator arm (34) and/or the article carrier (45) is provided with a weighting means (100) for weight detection of an article supported on the push-out member (58).

4. The shelf storage according to any one of claims 1-3, **characterized in that** the push-out member (58) is coupled to a path measuring device (67) indicating the position of the push-out member relative to the article carrier (45).

5. The shelf storage according to any one of claims 1-4, **characterized in that** the push-out member (58) is a component of a length measuring device (88) provided with an abutment means (89) having an article (W), arranged in the article carrier (45), pressed thereon by the push-out member (58).

6. The shelf storage according to any one of claims 1-5, **characterized in that** the push-out member (58) comprises a drive unit (63) and that this drive unit (63) is provided with a detection unit responding to a resistance during the push-out movement to thus detect an already occupied shelf bin.

7. The shelf storage according to any one of claims 1-6, **characterized in that** a plurality of exchangeable article carriers (45,45a,45b) are provided, each comprising a coupling means (49) for coupling to a manipulator arm (34) of the manipulator (29), and that a parking station (70) to be accessed by the manipulator arm (34) is provided wherein the article carriers (45,45a,45b) can be deposited and whereon they can be taken up again by the manipulator arm (34).

8. The shelf storage according to any one of claims 1-7, **characterized in that** the push-out member (58) comprises a pusher body (59) which is a component of the article carrier (45), and a drive member (63,64,60) arranged for coupling to the pusher body (59) and being a component of the manipulator arm (34).

9. The shelf storage according to any one of claims 1-8, **characterized in that** the manipulator arm (34) comprises a head (35) with coupling means (50,51;52,53) for coupling an article carrier (45), and sensors (84,85) with a forward detection range.

10. The shelf storage according to any one of claims 1-9, **characterized in that** the manipulator arm (34) comprises a head (35) with coupling means (50,51;52,53) for coupling an article carrier (45), and sensors (81,82) for detecting the forward and rearward end positions of the push-out member (58).

## Revendications

1. Magasin à rayonnage comprenant un manipulateur (29) apte à introduire des produits (W) dans un casier de rayonnage (17) et à les sortir du casier de rayonnage, le manipulateur (29) présentant un support de produit (45) avec une surface de support (48) pouvant être introduite dans un casier de rayonnage (17), **caractérisé en ce que** le manipulateur présente un poussoir (58) commandé pouvant être déplacé le long de la surface de support (48).

2. Magasin à rayonnage selon la revendication 1, **caractérisé en ce que** le support de produit (45) est une douille (47), qui est fixée sur un bras de manipulateur (34) pouvant pivoter autour d'un axe horizontal (Z) et dont le fond est traversé par une tige (60) du poussoir (58).

3. Magasin à rayonnage selon la revendication 1 ou 2, **caractérisé en ce qu'**un bras de manipulateur (34) portant le support de produit (45) peut pivoter dans une position verticale, et **en ce que** le bras de manipulateur (34) et/ou le support de produit (45) présente un dispositif de pesage (100) pour déterminer le poids d'un produit (W) reposant sur le poussoir (58).

4. Magasin à rayonnage selon l'une des revendications 1-3, **caractérisé en ce que** le poussoir (58) est couplé à un dispositif de mesure de course (67) qui indique la position du poussoir par rapport au support de produit (45).

5. Magasin à rayonnage selon l'une des revendications 1-4, **caractérisé en ce que** le poussoir (58) est solidaire d'un dispositif de mesure de longueur (88) qui présente un dispositif de butée (89), contre lequel le poussoir (58) pousse un produit (W) se trouvant dans le support de produit (45).

6. Magasin à rayonnage selon l'une des revendications 1-5, **caractérisé en ce que** le poussoir (58) présente un entraînement (63), et **en ce que** cet entraînement (63) présente un dispositif d'identification qui réagit à une résistance lors de la rétraction et qui identifie ainsi un casier de rayonnage déjà occupé.

7. Magasin à rayonnage selon l'une des revendications 1-6, **caractérisé en ce que** plusieurs supports de produit (45, 45a, 45b) interchangeables sont prévus qui présentent respectivement un dispositif de couplage (49) pour l'accouplement à un bras de manipulateur (34) du manipulateur (29), et **en ce qu'**une place de parkage (70) pouvant être atteinte par le bras de manipulateur (34) est prévue, dans laquelle les supports de produit (45, 45a, 45b) peuvent être rangés et sur laquelle ils peuvent être repris par le bras de manipulateur (34).

8. Magasin à rayonnage selon l'une des revendications 1-7, **caractérisé en ce que** le poussoir (58) présente un corps de poussoir (59) solidaire du support de produit (45) ainsi qu'un élément d'entraînement (63, 64, 60) pouvant être accouplé au corps de poussoir (59) et qui est solidaire du bras de manipulateur (34).

9. Magasin à rayonnage selon l'une des revendications 1-8, **caractérisé en ce que** le bras de manipulateur (34) présente une tête (35) comportant des moyens de couplage (50, 51 ; 52, 53) pour le couplage d'un support de produit (45) et des capteurs (84, 85) présentant une zone de détection orientée vers l'avant.

10. Magasin à rayonnage selon l'une des revendications 1-9, **caractérisé en ce que** le bras de manipulateur (34) présente une tête (35) comportant des moyens de couplage (50, 51 ; 52, 53) pour le couplage d'un support de produit (45) et des capteurs (81, 82) pour détecter la position extrême avant et arrière du poussoir (58).
